# EUROPÄISCHE PATENTSCHRIFT

(11) **EP 3 765 349 B1**
(45) Veröffentlichungstag und Bekanntmachung des Hinweises auf die Patenterteilung: **19.01.2022**
(21) Anmeldenummer: 19708791.9
(22) Anmeldetag: 20.02.2019
(51) Int. Cl.: B62D 7/15, B66F 9/00, B66F 9/07, B66F 9/20, B62D 1/02, B66F 9/075

(54) **MEHRWEGETRANSPORTFAHRZEUG**
MULTIDIRECTIONAL TRANSPORT VEHICLE
VÉHICULE DE TRANSPORT MULTIDIRECTIONNEL

(30) Priorität: 13.03.2018 DE 102018105712
(43) Veröffentlichungstag der Anmeldung: 20.01.2021
(73) Patentinhaber: Hubtex Maschinenbau GmbH & Co. KG, 36041 Fulda (DE)
(72) Erfinder: KELLER, Jürgen, 36137 Großenlüder (DE)
(74) Vertreter: Kluin, Jörg-Eden
(86) Internationale Anmeldenummer: PCT/EP2019/054170
(87) Internationale Veröffentlichungsnummer: WO 2019/174875

(56) Entgegenhaltungen:
- WO-A1-2011/128222
- DE-A1-102004 055 282

## Beschreibung

Die Erfindung betrifft ein Mehrwegetransportfahrzeug mit einem Lenksystem mit mindestens drei lenkbaren Rädern und einem die Räder insbesondere mittels eines Lenkprogramms lenkenden Lenksollwertgebers, wobei ein Lenkpol, auf welchem die Achsen der Räder bei einer Kurvenfahrt ausgerichtet sind, durch Betätigung des Lenksollwertgebers entlang einer Lenkpolachse verlagert wird.

Ein Mehrwegetransportfahrzeug mit einem derartigen Lenksystem ist beispielsweise aus der WO 01/70556 A1 bekannt. Bei diesem Fahrzeug kann dieses Lenkprogramm, auch "Allradlenkung" genannt, während der Fahrt auf ein zweites Lenkprogramm zur gleichsinnigen Verdrehung der Lenkpolachse aller Räder durch Betätigung des Lenksollwertgebers, auch "Diagonallenkung" genannt, gewechselt werden. Bei Betätigung des Lenksollwertgebers werden die gelenkten Räder bei der Allradlenkung so betätigt, dass sich ihre Drehachsen stets in dem Lenkpol schneiden. Hingegen werden bei der Diagonallenkung die Räder in Abhängigkeit der Betätigung des Lenksollwertgebers so gelenkt, dass die Drehachsen der Räder parallel verlaufen, mit anderen Worten: dass der Lenkpol im Unendlichen liegt. Bei einer Betätigung des Lenksollwertgebers bei gewählter Diagonallenkung führt das Fahrzeug einen Richtungswechsel durch, ohne jedoch hierbei seine Ausrichtung zu verändern, wohingegen bei gewählter Allradlenkung die Ausrichtung des Fahrzeugs der Fahrtrichtungsänderung folgt.

Um im Bedarfsfalle die Ausrichtung des Fahrzeugs relativ zu seiner Fahrtrichtung unabhängig von dem gerade gewählten Lenkprogramm ändern zu können, ist bei diesem Fahrzeug ein weiteres Steuerorgan vorgesehen, welches im Bedarfsfalle zeitgleich mit dem Lenksollwertgeber betätigt werden kann. Die Betätigung dieses zweiten Steuerorgans führt zur Korrektur der Lenkwinkel der Räder zumindest einer Achse in einer nicht dem gewählten Lenkprogramm entsprechenden Weise, und zwar etwa proportional zur Auslenkung dieses Steuerorgans, das als Joystick ausgebildet ist.

Ein anderes Lenksystem für ein Mehrwegetransportfahrzeug ist aus der EP 1 657 140 B1 bekannt. Bei diesem Lenksystem sind zusätzlich zum Lenksollwertgeber, der stets nach dem Lenkprogramm "Allradlenkung" arbeitet, zwei weitere Bedienelemente vorgesehen: Ein erstes Bedienelement zur kontinuierlichen Verschiebung der Lenklinie und ein zweites Bedienelement zur kontinuierlichen Steuerung der Hauptrichtung des Fahrzeugs. Durch diese Maßnahme soll eine intuitive Lenkung geschaffen werden, die vollständig auf fest definierte Lenkprogramme verzichtet, um so eine höhere Flexibilität des Lenksystems zu erreichen. Das Dokument DE 10 2004 055 282 A1 offenbart ein Mehrwegetransportfahrzeug gemäss dem Oberbegriff des Anspruchs 1.

Nachteilig an dem vorzitierten Stand der Technik ist, dass für den Fahrer viele Eingabefreiheitsgrade bestehen und das Lenken eines derartigen Fahrzeugs eine ganz erhebliche Übung und auch im täglichen Betrieb eine erhebliche Konzentration erfordert, wenn unerwünschte, teilweise schwer beherrschbare Fahrsituationen vermieden werden sollen.

Der Erfindung liegt daher die Aufgabe zugrunde, ein Mehrwegetransportfahrzeug mit einem Lenksystem zu schaffen, welches eine ausreichende Flexibilität des Lenkens eines Mehrwegetransportfahrzeugs sicherstellt, jedoch für einen Fahrer einfacher betätigbar ist.

Diese Aufgabe wird durch das in Anspruch 1 wiedergegebene Mehrwegetransportfahrzeug gelöst.

Das erfindungsgemäße Mehrwegetransportfahrzeug weist eine eine Längsrichtung definierende Längsachse und eine eine Querrichtung definierende Querachse auf. Es weist ein Lenksystem auf, welches mindestens drei unabhängig lenkbare Räder - bevorzugt vier unabhängig lenkbare Räder - und einen die Räder lenkenden Lenksollwertgeber umfasst, wobei ein Lenkpol, auf welchen die Achsen der Räder bei einer Kurvenfahrt ausgerichtet sind, durch Betätigung des Lenksollwertgebers entlang einer Lenkpolachse verlagert wird.

Es ist ein Fahrtrichtungsschalter mit einer begrenzten Anzahl an voneinander getrennten Schaltstellungen vorgesehen.

Mit genau einer Schaltstellung des Fahrtrichtungsschalters ist sowohl jeweils genau eine Rotationslage der Lenkpolachse relativ zum Fahrzeug, als auch eine der beiden hierbei möglichen Fahrtrichtungen vorwählbar.

Durch genau einen Schaltvorgang am Fahrtrichtungsschalter wird also nicht nur die Orientierung der Fahrbewegung vorgewählt, beispielsweise Längsfahrt oder Querfahrt, sondern gleichzeitig auch, in welche Fahrtrichtung die Fahrt erfolgt, beispielsweise eine Fahrt in Richtung der Längsrichtung und zwar vorwärts. Hierdurch ist eine Voraussetzung für eine besonders einfache, intuitive Bedienung des Lenksystems geschaffen. Der Fahrtrichtungsschalter ist bevorzugt von dem Lenksollwertgeber verschieden.

Es ist ein von dem Lenksollwertgeber verschiedenes Fahrtrichtungsjustierelement vorgesehen, mit welchem die vorgewählte Rotationslage der Lenkpolachse - bevorzugt stufenlos - veränderbar ist. Auf diese Weise kann eine hohe Flexibilität des Mehrwegetransportfahrzeugs erzielt werden.

Die Formulierungen "Änderung der Rotationslage der Lenkpolachse" und "Verdrehung der Lenkpolachse" werden im Rahmen dieser Druckschrift synonym gebraucht.

Bei dem erfindungsgemäßen Mehrwegetransportfahrzeug ist es nicht erforderlich, dass der Lenksollwertgeber eine andere Funktion übernimmt, als das Verschieben des Lenkpols auf der Lenkpolachse. Zudem wird ein Kompromiss zwischen einer begrenzten Anzahl an fest vorwählbaren Fahrzuständen und der Möglichkeit, hiervon - insbesondere stufenlos - abzuweichen, erzielt, der einerseits eine hohe Flexibilität und andererseits ein einfaches Erlernen des Steuerns ermöglicht.

Bevorzugt ist ein Bedienelement vorgesehen, mittels welchem der Fahrgeschwindigkeits- Sollwert wählbar ist. Hierbei kann es sich beispielsweise um ein Gaspedal oder um eine Funktion eines Joysticks - etwa Joystick vor und zurück - handeln.

In der bevorzugten Ausführungsform bewirkt, je nachdem, welche Fahrtrichtung mittels des Fahrtrichtungsschalters vorgewählt war, wenn dieser betätigt wird, die Betätigung des Fahrtrichtungsschalters eine Fahrtrichtungsumkehr oder eine Änderung der Rotationslage der Lenkpolachse relativ zum Fahrzeug. Die Änderung der Rotationslage der Lenkpolachse bewirkt bevorzugt einen Fahrtrichtungswechsel.

Bevorzugt bewirkt das Lenksystem bei einer durch Betätigung des Fahrtrichtungsschalters ausgelösten Änderung der Fahrtrichtung einen fließenden Fahrtrichtungswechsel, während der Fahrt.

Bevorzugt ist mit dem Fahrtrichtungsjustierelement eine stufenlose Änderung der Rotationslage der Lenkpolachse, vorzugsweise um höchstens 90° in beide Richtungen, möglich.

Bevorzugt ist mit dem Fahrtrichtungsjustierelement eine Änderung der Rotationslage der Lenkpolachse proportional zu seiner Betätigung erzielbar.

Das Fahrtrichtungsjustierelement ist bevorzugt drehbar, bevorzugt zumindest in etwa um die Hochachse des Fahrzeugs.

Wenn das Fahrtrichtungsjustierelement, drehbar ist, dann bewirkt seine Aktivierung bevorzugt eine Verdrehung der Lenkpolachse proportional zu seiner Verdrehung und weiter bevorzugt in die Richtung, in die es verdreht wird.

Bevorzugt ist mit dem Fahrtrichtungsschalter eine der folgenden Fahrtrichtungen vorwählbar, in einer Ausführungsform ausschließlich:
- Längsfahrt in eine erste Fahrtrichtung, vorzugsweise vorwärts
- Längsfahrt in eine zweite, der ersten entgegengesetzten Fahrtrichtung, vorzugsweise rückwärts
- Querfahrt in eine erste Fahrtrichtung, vorzugsweise rechts
- Querfahrt in eine zweite, der ersten entgegengesetzten Fahrtrichtung, vorzugsweise links.

Bevorzugt weist der Fahrtrichtungsschalter eine Schaltstellung zur Vorwahl einer Längsfahrt in eine erste Fahrtrichtung des Fahrzeugs auf und eine hiervon verschiedene weitere Schaltstellung zur Vorwahl einer Längsfahrt in eine zweite, der ersten entgegengesetzten Fahrtrichtung des Fahrzeugs. Bevorzugt weist der Fahrtrichtungsschalter eine Schaltstellung zur Vorwahl einer Querfahrt des Fahrzeugs in eine erste Fahrtrichtung auf und eine hiervon verschiedene weitere Schaltstellung, zur Vorwahl einer Querfahrt in eine zweite, der ersten entgegengesetzten Fahrtrichtung.

Bei der Vorwahl einer Längsfahrt des Fahrzeugs in eine erste Fahrtrichtung oder Längsfahrt in eine zweite, der ersten entgegengesetzten Fahrtrichtung des Fahrzeugs, wird die Lenkpolachse bevorzugt parallel zur Querachse des Fahrzeugs gedreht, wenn sie sich zum Zeitpunkt der Vorwahl nicht bereits in dieser Lage befindet und es wird automatisch, je nach Vorwahl, die Richtung der Längsfahrt in die erste oder zweite Fahrtrichtung festgelegt. Bei der Vorwahl einer Querfahrt in eine erste Fahrtrichtung oder Querfahrt in eine zweite, der ersten entgegengesetzten Fahrtrichtung wird die Lenkpolachse bevorzugt parallel zur Längsachse des Fahrzeugs gedreht, wenn sie sich zum Zeitpunkt der Vorwahl nicht bereits in dieser Lage befindet.

Bevorzugt ist der Fahrtrichtungsschalter lagerichtig zur Längsachse und zur Querachse des Fahrzeugs angeordnet, sodass die Lage einer Schaltstellung des Fahrtrichtungsschalters in dem Fahrzeug der Richtung entspricht, deren Fahrtrichtungsvorwahl sie bewirkt. Hierdurch wird eine besonders einfache und intuitive Bedienbarkeit des Lenksystems erreicht. Bei auf dem Fahrtrichtungsjustierelement angeordneten Fahrtrichtungsschalter gilt dies bevorzugt jedenfalls bei nicht betätigtem Fahrtrichtungsjustierelement.

Bevorzugt umfasst der Fahrtrichtungsschalter vier getrennte Schaltstellungen.

Der Fahrtrichtungsschalter ist bevorzugt so in dem Fahrzeug angeordnet, dass zwei Schaltstellungen zueinander beabstandet entlang der Längsachse und zwei Schaltstellungen zueinander beabstandet entlang der Querachse des Fahrzeugs ausgebildet sind. Bei auf dem Fahrtrichtungsjustierelement angeordneten Fahrtrichtungsschalter gilt dies bevorzugt jedenfalls bei nicht betätigtem Fahrtrichtungsjustierelement. Durch die beiden Schaltstellungen entlang der Längsachse sind bevorzugt die Längsfahrten in den beiden möglichen Fahrtrichtungen vorwählbar und durch die beiden Schaltstellungen entlang der Querachse des Fahrzeugs sind bevorzugt die Querfahrten in den beiden möglichen Richtungen vorwählbar.

In der bevorzugten Ausführungsform kreuzen sich die gedanklichen Verbindungslinien zwischen den beiden entlang der Längsachse und den beiden entlang der Querachse verlaufenden Schaltstellungen des Fahrtrichtungsschalters zwischen den Schaltstellungen, der Fahrtrichtungsschalter kann in dieser Ausführungsform auch als Kreuz-Schaltelement bezeichnet werden. Das Kreuz-Schaltelement umfasst bevorzugt vier getrennte - vorzugsweise also nicht ineinander übergehende - Schaltstellungen, vorzugsweise genau vier.

Das Kreuz-Schaltelement umfasst in einer bevorzugten Ausführungsform einen Wippschalter, mit zwei senkrecht zueinander verlaufenden Betätigungsachsen. Eine der beiden Betätigungsachsen verläuft bevorzugt zumindest in etwa in Richtung der Längsachse des Fahrzeugs und die andere Betätigungsachse verläuft bevorzugt zumindest in etwa in Richtung der Querachse des Fahrzeugs. Bei auf dem Fahrtrichtungsjustierelement angeordneten Fahrtrichtungsschalter gilt dies bevorzugt jedenfalls bei nicht betätigtem Fahrtrichtungsjustierelement.

Wenn die beiden Betätigungsachsen nicht, wie bevorzugt, zumindest etwa horizontal verlaufen, dann verläuft eine der beiden Betätigungsachsen bevorzugt zumindest in etwa in der Ebene aus Hochachse und Längsachse des Fahrzeugs und die andere Betätigungsachse verläuft dann bevorzugt zumindest in etwa in der Ebene aus Hochachse und Querachse des Fahrzeugs. Bei auf dem Fahrtrichtungsjustierelement angeordneten Fahrtrichtungsschalter gilt dies bevorzugt jedenfalls bei nicht betätigtem Fahrtrichtungsjustierelement.

Bevorzugt umfasst der Fahrtrichtungsschalter und/oder das Fahrtrichtungsjustierelement ein Tast-, Zug-, Kipp-, Wipp- und/oder Drehelement, etwa in Form eines Joysticks.

Bevorzugt ist der Fahrtrichtungsschalter auf dem Fahrtrichtungsjustierelement angeordnet. In einer Ausführungsform ist der Fahrtrichtungsschalter in das Fahrtrichtungsjustierelement integriert. Bevorzugt ist der Fahrtrichtungsschalter auf dem Fahrtrichtungsjustierelement so angeordnet, dass es sich bei einer Betätigung des Fahrtrichtungsjustierelements mit diesem mit bewegt. Wenn das Fahrtrichtungsjustierelement, die bevorzugt drehbar ist, dann ist der Fahrtrichtungsschalter bevorzugt mit diesem mitdrehbar. Wenn das Fahrtrichtungsjustierelement, wie bevorzugt, einen Joystick umfasst, dann ist der Fahrtrichtungsschalter bevorzugt in den Kopf des Joysticks integriert.

Bevorzugt umfasst der Fahrtrichtungsschalter ein Tast-, Zug-, Kipp-, Wipp- und/oder Drehelement.

Wenn das Fahrtrichtungsjustierelement drehbar ist, dann ist es bevorzugt in beliebiger Weise ausgestaltet, die eine Verdrehung der Lenkpolachse als Funktion der Auslenkung des Fahrtrichtungsjustierelements aus seiner Mittelstellung gestattet. Das Fahrtrichtungsjustierelement umfasst bevorzugt einen Joystick.

Der Lenksollwertgeber kann in beliebiger Weise ausgestaltet sein, die eine Verschiebung des Lenkpols auf der Lenkpolachse als Funktion der Auslenkung des Lenksollwertgebers aus seiner Mittelstellung gestattet. Bevorzugt umfasst der Lenksollwertgeber hierzu einen Joystick, besonders bevorzugt ein Lenkrad.

Bevorzugt ist mit dem Fahrtrichtungsschalter die Rotationslage der Lenkpolachse relativ zum Fahrzeug unabhängig davon vorwählbar, ob und wie weit die Lenkpolachse zuvor mittels des Fahrtrichtungsjustierelement verdreht wurde. Bevorzugt bewirkt eine bestimmte Betätigung des Fahrtrichtungsschalters also stets, dass die Lenkpolsachse in genau dieselbe Rotationslage relativ zum Fahrzeug gebracht wird, unabhängig davon, in welcher Rotationslage sie sich zum Zeitpunkt der Betätigung befindet.

In der bevorzugten Ausführungsform bewirkt eine Betätigung des Fahrtrichtungsschalters nach vorangegangener Betätigung des Lenksollwertgebers die Verdrehung der Lenkpolachse in eine Rotationslage senkrecht zur vorgewählten Fahrtrichtung, sofern sie nicht bereits in dieser Lage angeordnet ist. Vorzugsweise erfolgt dies derart, dass die Position des Lenkpols auf der Lenkpolachse beibehalten wird. Weiter bevorzugt erfolgt eine etwaige Verdrehung der Lenkpolachse derart, dass die durch den Lenksollwertgeber bewirkte Rotationsrichtung des Fahrzeugs beibehalten wird.

Die Lenkpolachse verläuft bei Geradeausfahrt parallel zu den Radachsen, also senkrecht zur Fahrtrichtung. Die Lenkpolachse verläuft bei betätigtem Lenksollwertgeber bevorzugt senkrecht zur Tangente der Kurvenfahrt. Die Lenkpolachse verläuft bevorzugt stets durch die Fahrzeugmitte. Die Lenkpolachse ist bevorzugt lediglich drehbar, jedoch nicht verschiebbar. Die Lenkpolachse ist bevorzugt ausschließlich um einen einzigen Punkt verdrehbar. Die Lenkpolachse ist bevorzugt ausschließlich um die Fahrzeugmitte verdrehbar. Eine Änderung der Rotationslage der Lenpolkachse bewirkt bevorzugt eine Lenkung der Räder.

Als Längsfahrt wird im Rahmen dieser Druckschrift eine Fahrt in Richtung der Längsachse des Fahrzeugs bezeichnet, die gerade oder entlang einer Kurvenbahn verlaufen kann. Als Querfahrt wird im Rahmen dieser Druckschrift eine Fahrt in Richtung der Querachse des Fahrzeugs bezeichnet, die gerade oder entlang einer Kurvenbahn verlaufen kann.

Die Längsachse des Fahrzeugs verläuft bevorzugt in Richtung der normalen Bewegungsrichtung des Fahrzeugs. Die Längsachse des Fahrzeugs verläuft bevorzugt von der Fahrzeugmitte zur Vorderseite des Fahrzeugs. Eine Längsfahrt, bei der die Vorderseite vorne ist, wird im Rahmen dieser Druckschrift auch als Vorwärtsfahrt bezeichnet, eine Längsfahrt mit hierzu umgekehrter Fahrtrichtung auch als Rückwärtsfahrt, eine Querfahrt, die in Vorwärtsfahrtrichtung betrachtet nach rechts verläuft, auch als Fahrt nach rechts und eine Querfahrt mit hierzu umgekehrte Fahrtrichtung auch als Fahrt nach links. Wenn das Fahrzeug, wie bevorzugt, ein Mehrwegestapler mit einer Traggabel ist, dann ist die Vorderseite des Fahrzeugs bevorzugt die Traggabelseite des Fahrzeugs. Die Querachse verläuft senkrecht zur Längsachse.

Mittels des Fahrtrichtungsschalters und/oder des Fahrtrichtungsjustierelements ist bevorzugt ausschließlich die Translationsbewegung des Fahrzeugs beinflussbar.

Die Erfindung soll nun anhand eines in den Zeichnungen gezeigten Ausführungsbeispiels näher erläutert werden es zeigen schematisch:
- Fig. 1: ein Mehrwegetransportfahrzeug am Beispiel eines Mehrwegestaplers in einer Ansicht von oben in Querfahrt;
- Fig. 2: eine Prinzipdarstellung des in Fig. 1 gezeigten Mehrwegestaplers in Kurven-Längsfahrt;
- Fig. 3: eine schematische Darstellung eines Fahrtrichtungsjustierele-ment mit integriertem Fahrtrichtungsschalter;
- Fig. 4: eine schematische Darstellung des als Lenkrad ausgebildeten Lenksollwertgebers;
- Fig. 5: eine Prinzipdarstellung von Fahrtzuständen des Mehrwege-transportfahrzeugs nach vorangegangener Betätigung von Lenksollwertgeber und/oder Fahrtrichtungsschalter und/oder Fahrtrichtungsjustierelement;
- Fig. 6: eine Prinzipdarstellung eines Ausführungsbeispiels eines Lenk-systems eines erfindungsgemäßen Fahrzeugs.

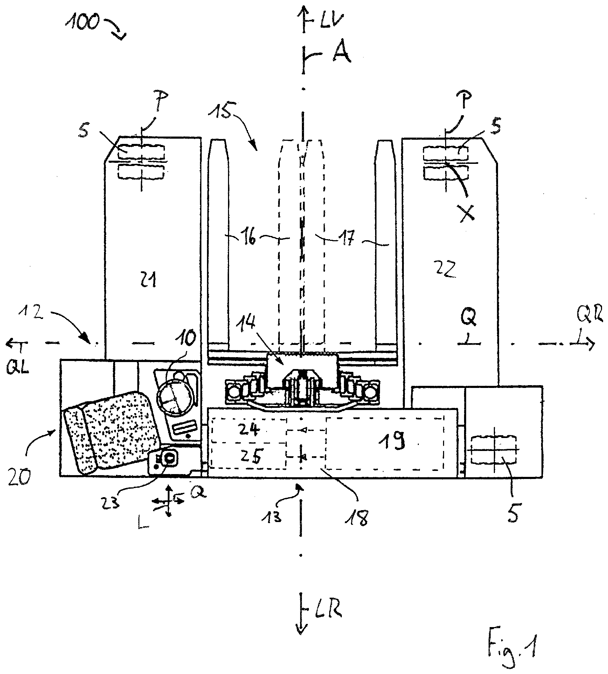

Das in Fig. 1 als Ganzes mit 100 bezeichnete Mehrwegetransportfahrzeug umfasst ein in Aufsicht etwa U-förmiges Fahrgestell 12. Es trägt auf dem Querbalken 13 des U einen aufrecht stehenden Mast 14, an dem heb- und senkbar eine Traggabelanordnung 15 angeordnet ist. Letztere ist derart ausgestaltet, dass ihre Zinken 16, 17 zwischen einer entfernten, in Fig. 1 durchgezogenen Position und einer benachbarten, in Fig. 1 gestrichelt dargestellten Position verlagerbar sind, um so ihren Abstand an die jeweils zu transportierenden Waren anpassen zu können.

Auf dem Querbalken 13 des U ist ferner ein Gehäuse 18 angeordnet, das einen Großteil der zum Betrieb des Mehrwegetransportfahrzeugs 100 benötigten Aggregate und Einrichtungen sowie eine Batterieanordnung 19 aufnimmt.

Gemäß Fig. 1 rechts und links an dem Querbalken 13 - letzteres durch die Darstellung eines Steuerstandes 20 verdeckt - ist jeweils ein Rad 5 angedeutet, welches durch einen in der Zeichnung nicht dargestellten Motor angetrieben ist. An den gemäß Fig. 1 sich von dem Querbalken 13 nach oben erstreckenden Segmenten 21, 22 des Fahrgestells 12 sind jeweils im Endbereich Räder 5 vorgesehen. Sämtliche Räder 5 sind um Radachsen P drehbar und jeweils um eine senkrecht zur Zeichenebene verlaufende Lenkachse X lenkbar angeordnet.

Der in Fig. 1 am linken Ende des Querbalkens 13 dargestellte Steuerstand 20 enthält die zum Betrieb des Mehrwegestaplers 100 von einer Bedienperson zu betätigenden Bedienungseinrichtungen, zu denen ein Lenkrad 10 und ein Joystick 23 mit einem Wippschalter (in Fig. 1 nicht dargestellt) mit zwei senkrecht zueinander verlaufenden Betätigungsachsen zählt.

Ferner umfasst der Steuerstand eine nicht näher dargestellte Einrichtung - beispielsweise ein "Gaspedal" -, die den Sollwert für die Antriebsleistung der in der Zeichnung nicht dargestellten Fahrmotoren vorgibt, die von Steuereinheiten 24, 25 bereitgestellt wird.

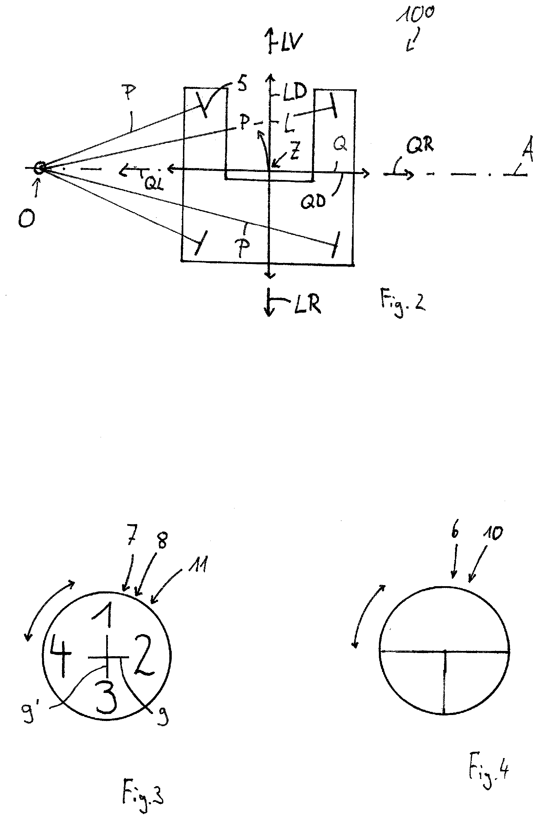

Fig. 2 zeigt das in Fig. 1 dargestellte Fahrzeug in weiter schematisierter Darstellung und in einer Kurvenfahrt, wobei deutlich wird, dass die Achsen P der Räder 5 hierbei auf einen Lenkpol O ausgerichtet sind, der durch Betätigung des Lenksollwertgebers 6 entlang einer Lenkpolachse A verlagert wird.

Figuren 1 und 2 zeigen auch die eine Längsrichtung LD definierende Längsachse L und die eine Querrichtung QD definierende Querachse Q des Fahrzeugs. Auch die beiden möglichen Fahrtrichtungen LV und LR, nämlich vorwärts und rückwärts einer Längsfahrt und die beiden möglichen Fahrtrichtungen QL, QR einer Querfahrt, nämlich links und rechts, sind gezeigt. Die Längsachse L des Fahrzeugs verläuft von der Fahrzeugmitte zur Traggabelseite des Fahrzeugs.

Fig. 3 zeigt den in das Fahrtrichtungsjustierelement 8 integrierten Fahrtrichtungsschalter 7. Der Fahrtrichtungsschalter 7 umfasst einen Wippschalter mit zwei zueinander senkrecht verlaufenden Betätigungsachsen und hieraus resultierenden vier Schaltstellungen 1, 2, 3, 4. Jede Schaltstellung wird durch Wippen des Wippschalters auf die entsprechende Schaltstellung zu betätigt. Der Wippschalter ist so in dem Fahrzeug angeordnet, dass zwei Schaltstellungen 1, 3 zueinander beabstandet entlang der Längsachse L und zwei Schaltstellungen 2, 4 zueinander beabstandet entlang der Querachse Q des Fahrzeugs ausgebildet sind. In Fig. 3 ist das Fahrtrichtungsjustierelement 8 in nicht betätigtem Zustand gezeigt.

Das Fahrtrichtungsjustierelement 8 ist als etwa um die Hochachse des Fahrzeugs drehbarer Joystick 23 ausgebildet, in dessen Kopf der Fahrtrichtungsschalter 7 integriert ist. Bei einem Drehen des Fahrtrichtungsjustierelements 8 dreht sich der Fahrtrichtungsschalter 7 mit.

Fig. 4 zeigt den Lenksollwertgeber 6, der ein Lenkrad 10 umfasst, in nicht betätigtem Zustand.

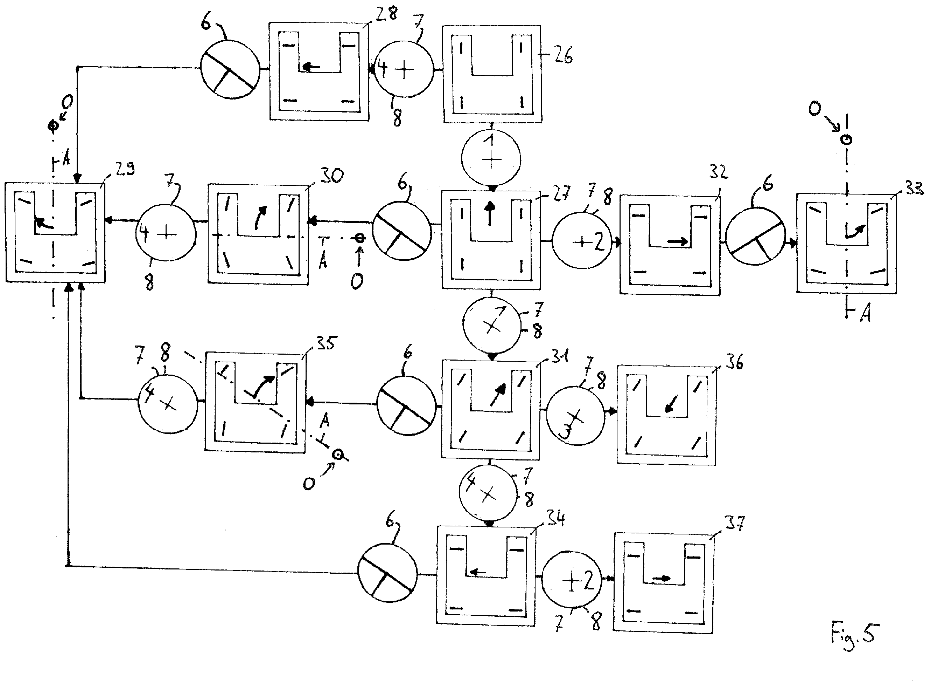

Fig. 5 verdeutlicht das Zusammenspiel von Lenksollwertgeber 6 und/oder Fahrtrichtungsschalter 7 und/oder Fahrtrichtungsjustierelement 8.

Bei dem in Fig. 5 gezeigten Wippschalter ist, anders als bei Fig. 3, jeweils lediglich eine der vier möglichen Schaltstellungen dargestellt und zwar die, die betätigt wurde.

Das in den Zeichnungen gezeigte Mehrwegetransportfahrzeug weist ein Bedienelement auf, mittels welchem der Fahrgeschwindigkeits- Sollwert wählbar ist. Hierbei kann es sich beispielsweise um ein Gaspedal handeln. Bei den in Fig. 5 gezeigten Fahrzuständen, mit Ausnahme des Neutralzustands 26, ist dieses Gaspedal, jeweils betätigt.

Ausgehend von einer Neutralstellung 26 führt das Bewirken einer der beiden entlang der Längsachse des Fahrzeugs angeordneten Schaltstellungen und zwar die der Traggabelseite des Fahrzeugs zugewandte Schaltstellung 1, dazu dass sich das Fahrzeug in eine Längsfahrt 27 in vorwärts Fahrtrichtung LV begibt.

Wird stattdessen eine der beiden entlang der Querachse Q des Fahrzeugs angeordneten Schaltstellungen bewirkt und zwar die in Fig. 5 links angeordnete Schaltstellung 4, dann führt dies dazu, dass sich das Fahrzeug in eine Querfahrt 28 nach links in Fahrtrichtung QL begibt. Wird, ausgehend von diesem Zustand, das Lenkrad betätigt, dann führt dies zu einer Quer-Kurvenfahrt 29.

Wird das Lenkrad ausgehend von der Längsfahrt 27 in Vorwärtsfahrtrichtung LV betätigt, dann führt dies zu einer Längs-Kurvenfahrt 30.

Wird ausgehend von der Längsfahrt 27 in Vorwärtsfahrtrichtung LV das Fahrtrichtungsjustierelement 8 betätigt, dann führt dies zu einer Diagonal-Geradeausfahrt 31.

Ausgehend von der Längsfahrt 27 in Vorwärtsfahrtrichtung LV führt das Bewirken einer der beiden entlang der Querachse Q des Fahrzeugs angeordneten Schaltstellungen und zwar die der in Fig. 5 rechts angeordneten Schaltstellung 2, dazu dass sich das Fahrzeug in eine Querfahrt 32 in Fahrtrichtung QR begibt, also nach rechts. Diese Querfahrt kann durch Betätigen des Lenksollwertgebers wiederum in eine quer-Kurvenfahrt 33 geändert werden.

Ausgehend von der Diagonal-Geradeausfahrt 31 führt das Bewirken einer der beiden entlang der Querachse Q des Fahrzeugs angeordneten Schaltstellungen und zwar die der in Fig. 5 links angeordneten Schaltstellung 4, dazu dass sich das Fahrzeug in eine Querfahrt 34 in Fahrtrichtung QL begibt, also nach links. Wird hiervon ausgehend der Lenksollwertgeber betätigt, dann führt dies erneut zu der Quer-Kurvenfahrt 29.

Wird ausgehende von der Diagonal-Geradeausfahrt 31 der Lenksollwertgeber betätigt, dann führt dies zu einer Diagonal-Kurvenfahrt 35, bei der die Lenkpolachse A schräg durch das Fahrzeug hindurch verläuft. Hiervon ausgehend führt das Bewirken einer der beiden entlang der Querachse Q des Fahrzeugs angeordneten Schaltstellungen und zwar die der in Fig. 5 links angeordneten Schaltstellung 4, dazu dass sich das Fahrzeug erneut in die Quer-Kurvenfahrt 29 begibt.

Ausgehend von der Diagonal-Geradeausfahrt 31 führt das Bewirken einer der beiden entlang der Längsachse L des Fahrzeugs angeordneten Schaltstellungen und zwar die der in Fig. 5 unten angeordneten Schaltstellung 3 dazu dass, sich das Fahrzeug in eine diagonal-Geradeausfahrt 37 mit umgekehrter Fahrtrichtung begibt. Es kehrt sich also lediglich die Fahrtrichtung um.

Ausgehend von der Querfahrt 34 in Fahrtrichtung QL führt das Bewirken einer der beiden entlang der Querachse Q des Fahrzeugs angeordneten Schaltstellungen und zwar die der in Fig. 5 rechts angeordneten Schaltstellung 2, dazu dass sich das Fahrzeug in eine Querfahrt 37 mit umgekehrter Fahrtrichtung begibt. Es kehrt sich also wiederum lediglich die Fahrtrichtung um.

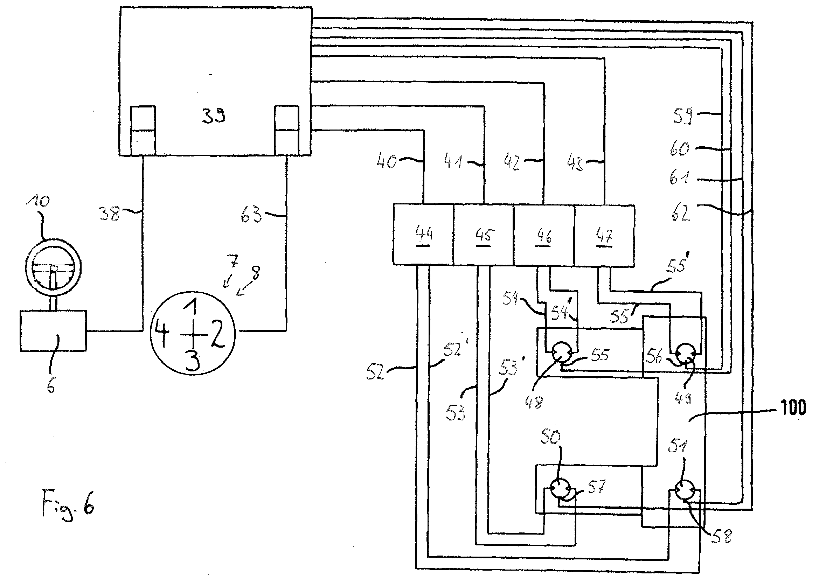

Wie Fig. 6 verdeutlicht, ist das Lenkrad 10 mit einem Lenksollwertgeber 6 verbunden, der die Position des Lenkrades 10 in korrelierte elektrische Signale umwandelt. Letztere werden über eine elektrische Leitung 38 dem zentralen Steuersystem 39 zugeführt. Dieses wandelt die von dem Lenksollwertgeber 6 empfangenen Daten in Signale um, die über Leitungen 40, 41, 42, 43, hydraulischen Ventilen 44, 45, 46, 47 zwecks Betätigung der Lenkeinrichtungen 48, 49, 50, 51 der Räder des Mehrwegetransportfahrzeugs zugeführt werden.

Jede der Lenkeinrichtungen 48, 49, 50, 51 umfasst einen Hydromotor, der über zwei Hydraulikleitungen 52, 52'; 53, 53'; 54, 54'; 55, 55' mit den hydraulischen Ventilen 44, 45, 46, 47 verbunden ist, und je nach von dem Steuersystem vorgegebenem Solllenkwinkel mit Hydraulikflüssigkeit beaufschlagt wird.

Jede der im Übrigen in herkömmlicher Weise ausgestalteten Lenkeinrichtungen 48, 49, 50, 51 umfasst Lenkwinkelsensoren 55, 56, 57, 58, die über elektrische Leitungen 59, 60, 61, 62 ein mit dem jeweiligen Ist-Lenkwinkel korreliertes elektrisches Signal dem Steuersystem 39 zur Verfügung stellen, so dass eine Regelung der Lenkeinrichtungen 48, 49, 50, 51 im engeren Sinne erfolgt.

Der Fahrtrichtungsschalter 7 und das Fahrtrichtungsjustierelement 8 sind über eine Signalleitung 48 mit dem Steuersystem 39 verbunden.

### Bezuaszeichenliste:

- 100: Mehrwegetransportfahrzeug
- 1, 2, 3, 4: Schaltstellungen
- 5: Räder
- 6: Lenksollwertgeber
- 7: Fahrtrichtungsschalter
- 8: Fahrtrichtungsjustierelement
- 9, 9': gedankliche Verbindungslinien
- 10: Lenkrad
- 11: Wippschalter
- 12: Fahrgestell
- 13: Querbalken
- 14: Mast
- 15: Traggabelanordnung
- 16, 17: Zinken
- 18: Gehäuse
- 19: Batterieanordnung
- 20: Steuerstand
- 21, 22: Segmente des Fahrgestells
- 23: Joystick
- 24, 25: Steuereinheiten
- 26: Neutralstellung
- 27 bis 37: Fahrzustände
- 38: elektrische Leitung
- 39: zentrales Steuersystem
- 44, 45, 46, 47: hydraulische Ventile
- 48, 49, 50, 51: Lenkeinrichtung
- 52, 52', 53, 53': Hydraulikleitungen
- 54, 54': Hydraulikleitungen
- 55, 56, 57, 58: Lenkwinkelsensor
- 59, 60, 61, 62: elektrische Leitungen
- 63: Signalleitung
- A: Lenkpolachse
- L: Längsachse
- LD: Längsrichtung
- O: Lenkpol
- P: Radachse
- Q: Querachse
- QD: Querrichtung
- LV, LR, QR, QL: Fahrtrichtungen
- X: Lenkachsen
- Z: Lenkpolachsendrehpol

## Patentansprüche

1. Mehrwegetransportfahrzeug (100) mit einer eine Längsrichtung (LD) definierenden Längsachse (L) und einer eine Querrichtung (QD) definierenden Querachse (Q), mit einem Lenksystem, wobei das Lenksystem mindestens drei unabhängig lenkbare Räder (5) und einen die Räder (5) lenkenden Lenksollwertgeber (6) umfasst, wobei ein Lenkpol (O), auf welchen die Achsen (P) der Räder (5) bei einer Kurvenfahrt ausgerichtet sind, durch Betätigung des Lenksollwertgebers (6) entlang einer Lenkpolachse (A) verlagert wird,
**dadurch gekennzeichnet,**
**dass** ein Fahrtrichtungsschalter (7) mit einer begrenzten Anzahl an voneinander getrennten Schaltstellungen (1, 2, 3, 4) vorgesehen ist,
wobei mit genau einer Schaltstellung (1, 2, 3, 4) des Fahrtrichtungsschalters (7) sowohl jeweils genau eine Rotationslage der Lenkpolachse (A) relativ zum Fahrzeug (100), als auch eine der beiden hierbei möglichen Fahrtrichtungen (LV, LR, QR, QL) vorwählbar ist und
ein von dem Lenksollwertgeber (6) verschiedenes Fahrtrichtungsjustierelement (8) vorgesehen ist, mit welchem die vorgewählte Rotationslage der Lenkpolachse (A) - bevorzugt stufenlos - veränderbar ist.

2. Mehrwegetransportfahrzeug nach Anspruch 1, **dadurch gekennzeichnet, dass** mit dem Fahrtrichtungsschalter (7) eine der folgenden Fahrtrichtungen vorwählbar ist:
- Längsfahrt in eine erste Fahrtrichtung (LV),
- Längsfahrt in eine zweite, der ersten entgegengesetzten Fahrtrichtung (LR),
- Querfahrt in eine erste Fahrtrichtung (QR),
- Querfahrt in eine zweite, der ersten entgegengesetzten Fahrtrichtung (QL).

3. Mehrwegetransportfahrzeug (100) nach Anspruch 1 oder 2, **dadurch gekennzeichnet, dass** der Fahrtrichtungsschalter (7) vier getrennte Schaltstellungen (1, 2, 3, 4) aufweist und als Wippschalter mit zwei zueinander senkrecht verlaufenden Betätigungsachsen ausgebildet ist, die parallel zur Längsachse (L) und zur Querachse (Q) des Fahrzeugs (100) verlaufen.

4. Mehrwegetransportfahrzeug (100) nach einem der Ansprüche 1 bis 3, **dadurch gekennzeichnet, dass** der Fahrtrichtungsschalter (7) in das Fahrtrichtungsjustierelement (8) integriert ist.

5. Mehrwegetransportfahrzeug (100) nach einem der Ansprüche 1 bis 4, **dadurch gekennzeichnet, dass** der Fahrtrichtungsschalter (7) ein Tast-, Zug-, Kipp-, Wipp- und/oder Drehelement umfasst und das Fahrtrichtungsjustierelement (8) einen Joystick umfasst und der Lenksollwertgeber (6) ein Lenkrad (10) umfasst.

6. Mehrwegetransportfahrzeug (100) nach einem der Ansprüche 1 bis 5, **dadurch gekennzeichnet, dass** die Lenkpolsachse (A) bei einer bestimmten Betätigung des Fahrtrichtungsschalters (7) immer in genau dieselbe Rotationslage relativ zum Fahrzeug gebracht wird, unabhängig davon, in welcher Rotationslage sie sich zum Zeitpunkt der Betätigung befindet.

7. Mehrwegetransportfahrzeug (100) nach einem der Ansprüche 1 bis 6, **dadurch gekennzeichnet, dass** bei einer Betätigung des Fahrtrichtungsschalters (7) nach vorangegangener Betätigung des Lenksollwertgebers (6) die Lenkpolachse (A) senkrecht zur vorgewählten Fahrtrichtung verdreht wird oder, sofern sie bereits in dieser Lage angeordnet ist, in dieser Lage verbleibt, wobei die Position des Lenkpols (O) auf der Lenkpolachse (A) beibehalten wird und die etwaige Verdrehung der Lenkpolachse (A) so herum erfolgt, dass die durch den Lenksollwertgeber (6) bewirkte Rotationsrichtung des Fahrzeugs beibehalten wird.

## Claims

1. Multidirectional transport vehicle (100) having a longitudinal axis (L) defining a longitudinal direction (LD) and a transverse axis (Q) defining a transverse direction (QD), comprising a steering system, the steering system comprising at least three independently steerable wheels (5) and a steering setpoint transmitter (6) steering the wheels (5), with a steering pole (O), on which the axes (P) of the wheels (5) are aligned when cornering, being moved along a steering pole axis (A) by actuating the steering setpoint transmitter (6),
**characterized in that**
a travel direction switch (7) having a limited number of switch positions which are separate from one another (1, 2, 3, 4) is provided,
it being possible for exactly one switch position (1, 2, 3, 4) of the travel direction switch (7) to be used to preselect exactly one rotational position of the steering pole axis (A) relative to the vehicle (100) in each case as well as one of the two possible travel directions (LV, LR, QR, QL) and
a travel direction adjustment element (8) which is different from the steering setpoint transmitter (6) being provided, with which element the preselected rotational position of the steering pole axis (A) can be changed, preferably continuously.

2. Multidirectional transport vehicle according to claim 1, **characterized in that** one of the following travel directions can be preselected using the travel direction switch (7):
- longitudinal travel in a first travel direction (LV),
- longitudinal travel in a second travel direction opposite to the first (LR),
- transverse travel in a first travel direction (QR),
- transverse travel in a second travel direction opposite to the first (QL).

3. Multidirectional transport vehicle (100) according to either claim 1 or claim 2, **characterized in that** the travel direction switch (7) has four separate switch positions (1, 2, 3, 4) and is designed as a rocker switch having two actuation axes which extend perpendicularly to one another and which extend in parallel with the longitudinal axis (L) and the transverse axis (Q) of the vehicle (100).

4. Multidirectional transport vehicle (100) according to any of claims 1 to 3, **characterized in that** the travel direction switch (7) is integrated in the travel direction adjustment element (8).

5. Multidirectional transport vehicle (100) according to any of claims 1 to 4, **characterized in that** the travel direction switch (7) comprises a touch, pull, tilt, rocker and/or rotary element and the travel direction adjustment element (8) comprises a joystick and the steering setpoint transmitter (6) comprises a steering wheel (10).

6. Multidirectional transport vehicle (100) according to any of claims 1 to 5, **characterized in that** the steering pole axis (A) is always brought into exactly the same rotational position relative to the vehicle when the travel direction switch (7) is actuated in a certain manner, regardless of the rotational position in which the axis is at the time of actuation.

7. Multidirectional transport vehicle (100) according to any of claims 1 to 6, **characterized in that**, when the travel direction switch (7) is actuated after the steering setpoint transmitter (6) has been actuated, the steering pole axis (A) is rotated perpendicularly to the preselected travel direction or, if it has already been arranged in this position, remains in this position, with the position of the steering pole (O) on the steering pole axis (A) being maintained and the possible rotation of the steering pole axis (A) taking place so that the rotational direction of the vehicle brought about by the steering setpoint transmitter (6) is maintained.

## Revendications

1. Véhicule de transport multidirectionnel (100) comportant un axe longitudinal (L) définissant un sens longitudinal (LD) et un axe transversal (Q) définissant un sens transversal (QD), comportant un système de direction, le système de direction comprenant au moins trois roues (5) directrices indépendantes et un transmetteur de valeur de consigne de direction (6) dirigeant les roues (5), un poteau de direction (O), sur lequel les axes (P) des roues (5) sont alignés en virage, étant déplacé le long d'un axe de poteau de direction (A) par actionnement du transmetteur de valeur de consigne de direction (6),
**caractérisé en ce**
**qu'**un commutateur de sens de déplacement (7) comportant un nombre limité de positions de commutation (1, 2, 3, 4) séparées les unes des autres est prévu,
à la fois respectivement exactement une position de rotation de l'axe de poteau de direction (A) par rapport au véhicule (100) ainsi que l'un des deux sens de déplacement (LV, LR, QR, QL) possibles pouvant être présélectionnées avec exactement une position de commutation (1, 2, 3, 4) du commutateur de sens de déplacement (7), et
un élément de réglage de sens de déplacement (8) différent du transmetteur de valeur de consigne de direction (6) étant prévu, avec lequel la position de rotation présélectionnée de l'axe de poteau de direction (A) peut être modifiée, de préférence en continu.

2. Véhicule de transport multidirectionnel selon la revendication 1, **caractérisé en ce que** l'un des sens de déplacement suivants peut être présélectionné avec le commutateur de sens de déplacement (7) :
- déplacement longitudinal dans un premier sens de déplacement (LV),
- déplacement longitudinal dans un second sens de déplacement (LR) opposé au premier sens de déplacement,
- déplacement transversal dans un premier sens de déplacement (QR),
- déplacement transversal dans un second sens de déplacement (QL) opposé au premier sens de déplacement.

3. Véhicule de transport multidirectionnel (100) selon la revendication 1 ou 2, **caractérisé en ce que** le commutateur de sens de déplacement (7) présente quatre positions de commutateur (1, 2, 3, 4) séparées et est conçu en tant que commutateur à bascule comportant deux axes d'actionnement s'étendant perpendiculairement l'un à l'autre et parallèlement à l'axe longitudinal (L) et à l'axe transversal (Q) du véhicule (100).

4. Véhicule de transport multidirectionnel (100) selon l'une des revendications 1 à 3, **caractérisé en ce que** le commutateur de sens de déplacement (7) est intégré dans l'élément de réglage de sens de déplacement (8).

5. Véhicule de transport multidirectionnel (100) selon l'une des revendications 1 à 4, **caractérisé en ce que** le commutateur de sens de déplacement (7) comprend un élément tactile, de traction, d'inclinaison, de bascule et/ou de rotation et l'élément de réglage de sens de déplacement (8) comprend un levier de commande et le transmetteur de valeur de consigne de direction (6) comprend un volant de direction (10).

6. Véhicule de transport multidirectionnel (100) selon l'une des revendications 1 à 5, **caractérisé en ce que** l'axe de poteau de direction (A) est toujours amené exactement dans la même position de rotation par rapport au véhicule lorsque le commutateur de sens de déplacement (7) est actionné d'une certaine manière, indépendamment de la position de rotation dans laquelle il se trouve au moment de l'actionnement.

7. Véhicule de transport multidirectionnel (100) selon l'une des revendications 1 à 6, **caractérisé en ce que** lors de l'actionnement du commutateur de sens de déplacement (7) après l'actionnement précédent du transmetteur de valeur de consigne de direction (6), l'axe de poteau de direction (A) est tourné perpendiculairement au sens de déplacement présélectionné ou, s'il est déjà disposé dans ladite direction, reste dans ladite position, la position du poteau de direction (O) sur l'axe de poteau de direction (A) étant maintenue et la rotation éventuelle de l'axe de poteau de direction (A) s'effectuant de manière à ce que le sens de rotation du véhicule provoqué par le transmetteur de valeur de consigne de direction (6) soit maintenu.
